Europäisches Patentamt

European Patent Office

Office européen des brevets

(19)

(11) Veröffentlichungsnummer: **0 258 550 B1**

(12) **EUROPÄISCHE PATENTSCHRIFT**

(45) Veröffentlichungstag der Patentschrift: **18.03.92**

(51) Int. Cl.5: **B60R 17/02**

(21) Anmeldenummer: **87108440.6**

(22) Anmeldetag: **11.06.87**

(54) **Zentralschmieranlage für Fahrzeuge.**

(30) Priorität: **05.09.86 DE 3630327**

(43) Veröffentlichungstag der Anmeldung:
**09.03.88 Patentblatt 88/10**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**EP-A- 0 131 910**
**DE-A- 2 458 711**

(73) Patentinhaber: **Lincoln GmbH**
**Heinrich-Hertz-Strasse Postfach 1263**
**W-6909 Walldorf(DE)**

(72) Erfinder: **Ostermeyer, Günter c/o KEIL &**
**SCHAAFSHAUSEN**
**Patentanwälte Ammelburgstrasse 34**
**W-6000 Frankfurt am Main 1(DE)**
Erfinder: **Rodemer, Karl c/o KEIL & SCHAAFS-**
**HAUSEN**
**Patentanwälte Ammelburgstrasse 34**
**W-6000 Frankfurt am Main 1(DE)**
Erfinder: **Steiger, Peter c/o KEIL & SCHAAFS-**
**HAUSEN**
**Patentanwälte Ammelburgstrasse 34**
**W-6000 Frankfurt am Main 1(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

**Beschreibung**

Die Erfindung bezieht sich auf eine Zentralschmieranlage nach dem Oberbegriff des Anspruchs 1.

Eine Zentralschmieranlage dieser Art ist aus der EP-A-0 131 910 bekannt. Bei dieser Zentralschmieranlage ist durch vom Zugwagen gespeiste, zu den Blinkleuchten und/oder den Bremsleuchten führende Stromkabel bei Betätigung dieser Leuchten ein Kondensator aufladbar, dem eine Zeitbildungseinrichtung nachgeschaltet ist. Die empfangenen Signale werden in einem ersten Impulszähler aufsummiert. Ist durch die Aufsummierung eine vorgegebene Pausenzeit erreicht, wird über einen Schalter beim nächsten Bremsvorgang eine Schmierpumpe betätigt. Die Betätigungszeit der Schmierpumpe wird in einem Impulszähler erfaßt, der nach Ablauf einer vorgegebenen Arbeitszeit die Stromzufuhr zur Schmierpumpe unterbricht. Als nachteilig erweist sich bei dieser Anordnung, daß die Betriebsdauer des Fahrzeuges nur ungenau erfaßt wird, da bspw. bei langen Autobahnfahrten je nach Verkehrsdichte und Fahrweise des Fahrers sowohl die Blinker als auch die Bremse unter Umständen nur selten betätigt werden, so daß dem Kondensator der Zeitbildungseinrichtung nicht häufig genug Impulse zugeführt werden und die Fahrzeugbetriebszeit nicht hinreichend erfaßt wird.

Angestrebt wird aber eine Lösung, bei welcher die Schmierung der dezentralen Schmierstellen eines solchen Fahrzeuges möglichst genau in Anpassung an die tatsächliche Betriebszeit, also die Zeit, während welcher das Fahrzeug gefahren wird, erfolgt.

In der Vergangenheit hat es bereits viele Versuche gegeben, sich diesem Problem zu nähern. So hat man beispielsweise die Hubbewegung der Radaufhängung dazu benutzt, die Schmiermittelpumpe unmittelbar anzutreiben. Dies erfordert eine verhältnismäßig großen und verschleißanfälligen Aufwand und ist nur bei pneumatisch oder hydraulisch angetriebenen Schmierpumpen möglich, nicht jedoch bei elektromotorisch angetriebenen Schmierpumpen. Ein weiterer Lösungsversuch besteht darin, die Anzahl der Radumdrehungen zu messen und bei Erreichen einer vorgegebenen Zahl von Radumdrehungen jeweils pneumatisch die Zentralschmieranlage auszulösen. Es wurde auch schon vorgeschlagen, die Anzahl der Bremsvorgänge zu erfassen und bei Erreichen einer vorgegebenen Zahl die Zentralschmieranlage pneumatisch auszulösen. Ferner wurde vorgeschlagen, bei jedem Bremsvorgang unmittelbar die Zentralschmieranlage elektrisch einzuschalten. Hierbei hängt das Maß der Schmierung jedoch unkontrolliert vom Fahrverhalten des Fahrers und der Beschaffenheit des Fahrweges ab. Etwas günstigere Ergebnisse können erzielt werden, wenn bei jedem Bremsvorgang eine Schmierung lediglich mit Zeitbegrenzung ausgelöst wird. Fernerhin wurde vorgeschlagen, bei derartigen Fahrzeugen die Schmierung aufgrund reiner Zeitsteuerung vorzunehmen. Hierbei besteht jedoch überhaupt keine Abhängigkeit von der Betriebsdauer des Fahrzeuges.

Aufgabe der vorliegenden Erfindung ist es daher, eine Zentralschmieranlage der eingangs genannten Art zu schaffen, bei welcher mit einfachen und zuverlässigen Mitteln erreicht ist, daß die Arbeitszeiten der Zentralschmieranlage möglichst genau in Abhängigkeit von der tatsächlichen (reinen) Betriebszeit des Fahrzeuges festgelegt werden.

Diese Aufgabe wird erfindungsgemäß bei einer Zentralschmieranlage der eingangs genannten Art mit den Merkmalen des Kennzeichenteils des Anspruchs 1 gelöst.

Bei einer erfindungsgemäßen Zentralschmieranlage wird die Stromversorgung vom Zugfahrzeug aus, die in einem Anhänger, Auflieger od. dgl., keine eigene Stromquelle aufweisenden Fahrzeug für die Bremsleuchte ohnehin vorhanden sein muß, auch für die Zentralschmieranlage ausgenutzt. Es wird sichergestellt, daß während der Benutzung des Fahrzeuges, also während des Fahrens selbst, ein Signal geliefert wird, welches diesen Bewegungszustand anzeigt. Dieses Signal bildet die Grundlage für die Ermittlung der tatsächlichen (reinen) Fahrzeugbetriebszeit. Als Sensoren kommen beispielsweise Mittel zum Abfühlen der Drehung der Räder, Mittel zum Erfassen der Bewegung bestimmter Fahrzeugteile, beispielsweise der Anhängergabel, Mittel zum Erfassen der Bewegung der Radaufhängung od. dgl., insbesondere aber Vibrationssensoren (wie Quecksilberschalter) in Frage, da letztere an beliebiger Stelle des Anhängerfahrzeuges (geschützt) und in unmittelbarer Nähe zu bzw. integriert mit der Zeitsteuereinrichtung angeordnet werden können. Ferner wird die jeweils aufgelaufene Fahrzeugbetriebszeit mit einer vorgegebenen bzw. veränderlich vorgebbaren Schmierpumpenpausenzeit, nach welcher (wieder) ein Schmiervorgang eingeleitet werden soll. Der Schmiervorgang selbst wird durch den nächsten Bremsvorgang selbst ausgelöst, und zwar jeweils nur für eine vorgegebene bzw. veränderlich vorgebbare Schmierpumpenarbeitszeit, nach welcher - unabhängig von der Länge des Bremsvorganges - der Schmiervorgang abgebrochen und erst nach einer erneuten Schmierpumpenpausenzeit wieder eingeleitet wird.

Bei dieser Zentralschmieranlage werden also die Schmierpumpenpausen- und -arbeitszeiten mit verhältnismäßig einfachen Mitteln zuverlässig außerordentlich genau entsprechend der Fahrzeugbetriebszeit eingehalten.

Die besondere Ausgestaltung der Erfindung nach Anspruch 2 ist insbesondere dann von Interesse, wenn ein Vibrationssensor als Sensor zur Feststellung der Bewegung des Anhängerfahrzeugs eingesetzt wird, da von einem solchen Vibrationssensor bei Schwingungen und Erschütterungen des Fahrzeuges nur verhältnismäßig kurze Impulse geliefert werden und die Impulspausen von der Länge des jeweils ausgelösten Ausgangssignales des ersten Zeitgliedes überbrückt werden, so daß an dem zweiten Zeitglied kontinuierlich ein den Betriebszustand des Anhängerfahrzeuges anzeigendes Signal ansteht.

Anspruch 3 bezieht sich auf eine weitere besondere Ausgestaltung des Erfindungsgedankens, bei welcher ohne besondere Stromquelle immer die erforderliche Spannung für die Zeitsteuereinrichtung zur Verfügung steht.

Damit bei der erfindungsgemäßen Zentralschmieranlage auch willkürlich Schmierungen unabhängig von der Betriebsdauer ausgelöst werden können, ist bei einer weiteren vorteilhaften Ausgestaltung die Maßnahme des Anspruchs 4 getroffen.

Hierbei kann es zweckmäßig sein, die Zentralschmieranlage nach Anspruch 5 auszugestalten, so daß ein neuer Schmiervorgang erst wieder nach vollständigem Ablauf der gesamten Schmierpumpenpausenzeit eingeleitet wird.

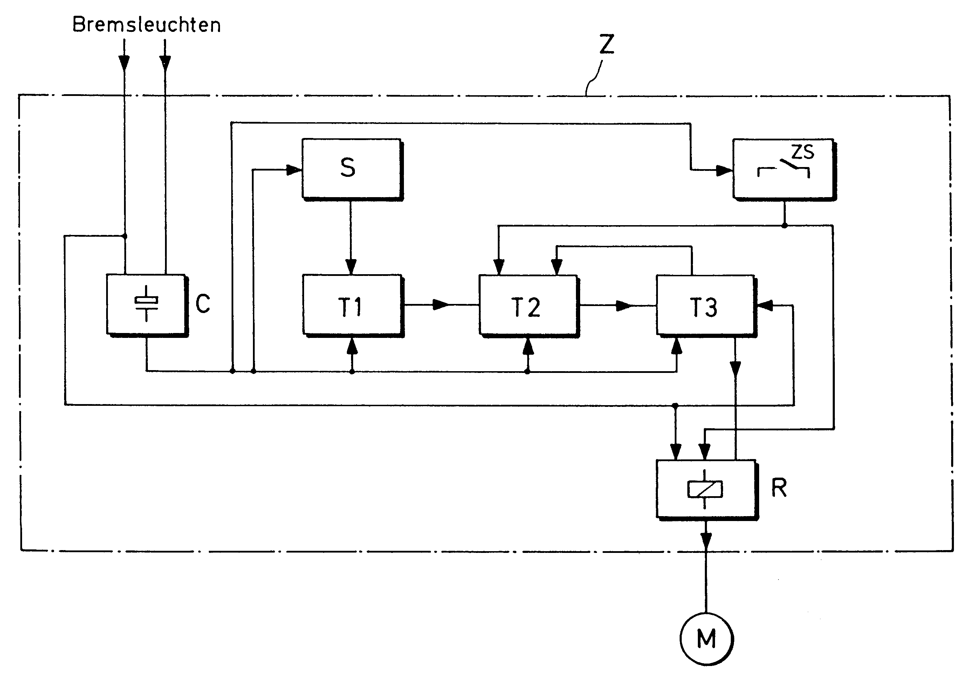

Ausführungsbeispiele der Erfindung werden nachfolgend anhand der Zeichnung näher erläutert.

Die einzige Figur veranschaulicht ein Schaltschema einer Zeitsteuereinrichtung einer die Erfindung aufweisenden Zentralschmieranlage.

Die Stromversorgung der Zeitsteuereinrichtung Z und des Antriebsmotors M für die Schmierpumpe wird von den Zuleitungen zu den Bremsleuchten abgenommen. Die Versorgungsspannung der einzelnen elektronischen Elemente der Zeitsteuereinrichtung Z wird einer Pufferkapazität c entnommen, die während jedes Bremsvorganges aufgeladen wird. Auf diese Weise steht immer die erforderliche Versorgungsspannung zur Verfügung. Die Versorgungsspannung wird, wie dargestellt, an einen Sensor S für die Ermittlung des Bewegungszustandes des Anhängerfahrzeuges und drei hintereinander angeordnete Zeitglieder $T_1$, $T_2$ und $T_3$ sowie an einen handbetätigbaren Schalter Z gelegt.

Die Funktionsweise der dargestellten Zeitsteuereinrichtung der Zentralschmieranlage ist folgende: Der Sensor S, vorzugsweise ein Vibrationssensor, erfaßt die bei einem sich bewegenden Anhängerfahrzeug auftretenden Schwingungen und Erschütterungen. Bei Bewegung wird von dem Sensor S ein Impuls an das erste Zeitglied $T_1$ abgegeben, worauf dieses während einer vorgegebenen, einstellbaren Zeit $t_1$ ein Signal an ein zweites Zeitglied $T_2$ abgibt. Die Zeitdauer des bei jedem Eingangsimpuls von dem Sensor S ausgelösten Signals dient dazu, Impulspausen zu überbrücken, damit an das Zeitglied $T_2$ während der Betriebsdauer des Anhängers ein konstantes Signal geliefert wird. Während jeder Erschütterung des Fahrzeuges startet das Zeitglied $T_1$ von neuem. Beim Stillstand des Fahrzeuges geht nach Ablauf der einmal fest eingestellten Zeit $t_1$ das Zeitglied $T_1$ in Grundstellung, in welcher kein Ausgangssignal an das Zeitglied $T_2$ geliefert wird. Sobald durch die Erschütterung des sich bewegenden Fahrzeuges das Zeitglied $T_1$ gestartet wird, steht wieder ein Eingangssignal an dem Zeitglied $T_2$ an. Von dem Zeitglied $T_2$ werden die Zeitdauern der jeweils von dem Zeitglied $T_1$ anstehenden Signale aufsummiert und mit einer vorgegebenen Pausenzeit $t_2$ verglichen. Im Stillstand des Fahrzeuges wird somit jeweils nach Ablauf des Zeitgliedes $T_1$ auch das Zeitglied $T_2$, die sogenannte Schmierpumpenpausenzeit, gestoppt. Die bisher aufgelaufene Pausenzeit wird jedoch gespeichert. Bewegt sich das Fahrzeug wieder von neuem, so wird durch den Sensor S das Zeitglied $T_1$ wieder gestartet und somit läuft auch die Pausenzeit am Unterbrechungszeitpunkt in dem Zeitglied $T_2$ wieder weiter. Bei Erreichen der voreingestellten maximalen Schmierpumpenpausenzeit $t_2$ gibt das Zeitglied $T_2$ ein Signal an das dritte Zeitglied $T_3$ ab. Dieses Zeitglied $T_3$ ist damit selbst freigegeben und gibt ein Freigabesignal an ein Ausgangsrelais R ab. Beim nächsten Bremsvorgang zieht das Ausgangsrelais R an und der Antriebsmotor M der Zentralschmierpumpe wird eingeschaltet. Da das Zeitglied $T_3$ freigegeben ist, wird von ihm die Zeitdauer des Bremsvorganges (die Bremsenbetätigungszeit) gemessen und mit einer voreingestellten maximalen Schmierpumpenarbeitszeit $t_3$ verglichen. Ist der Bremsvorgang kürzer als die maximale Schmierpumpenarbeitszeit $t_3$, so bleibt die erfaßte Bremsenbetätigungszeit am Ende des Bremsvorganges gespeichert und läuft beim nächsten Bremsvorgang weiter. Die Aufsummierung der Bremsenbetätigungszeiten erfolgt solange, bis die vorgegebene maximale Schmierpumpenarbeitszeit $t_3$ erreicht und überschritten wird. Beim Erreichen der maximalen Schmierpumpenarbeitszeit $t_3$ gibt das Zeitglied $T_3$ ein Signal (Rückstellsignal) an das Zeitglied $T_2$ und schaltet dies in die Grundstellung, so daß auch das von dem Zeitglied $T_2$ an das Zeitglied $T_3$ und damit an das Relais R gelieferte Freigabesignal verschwindet und der Schmiervorgang abgebrochen wird. Nun beginnt der Vorgang mit der Aufsummierung der Fahrzeugbetriebszeiten in dem Zeitglied $T_2$ über das Zeitglied $T_1$ von neuem, bis die vorgegebene Pausenzeit $t_2$ wieder erreicht ist usw.. Ist die Dauer des Bremsvorganges gleich oder größer als die eingestellte Arbeitszeit $t_3$ oder wird beim letzten Bremsvorgang durch Aufsummieren der Bremszeiten die Arbeitszeit $t_3$

überschritten, so wird der Schmiervorgang nur bis zum Ende der Arbeitszeit $t_3$ weitergeführt. Beim Ablauf der Arbeitszeit $t_3$ wird jedoch, wie erwähnt, die Bemessung der Betriebsdauer des Anhängerfahrzeuges und der Vergleich mit der in dem Zeitglied $T_2$ gespeicherten Pausenzeit erneut gestartet.

Mit dieser Zeitsteuereinrichtung wird sichergestellt, daß unter Berücksichtigung der Betriebsdauer des Anhängerfahrzeuges od. dgl. Fahrzeug ohne eigene Stromquelle immer nur nach vorgebbaren Intervallen (Pausenzeiten $t_2$) für eine vorgebbare Arbeitszeit $t_3$ geschmiert wird.

Um auch im Stillstand zu Wartungszwecken eine Schmierung ausführen zu können, weist die dargestellte Zeitsteuereinrichtung einen handbetätigbaren Schalter ZS auf. Bei Betätigung des Schalters ZS wird ein Freigabesignal an das Ausgangsrelais R gegeben und bei zusätzlicher Betätigung der Bremse wird die Zusatzschmierung ausgelöst. Gleichzeitig wird entsprechend der Darstellung an das Zeitglied T ein Rückstellsignal geliefert, so daß die dort aufsummierte Schmierpumpenpausenzeit zurückgestellt, d.h. das Zeitglied $T_2$ in seine Grundstellung zurückgeführt wird, und die nächste Schmierung im Betrieb frühestens wieder nach Ablauf der vollen Pausenzeit $t_2$ erfolgt, nämlich wenn der Anhänger in Betrieb ist.

Man erkennt, daß bei Verwendung eines Sensors S, welcher selbst ein kontinuierliches Betriebsdauersignal liefert, das Zeitglied $T_1$ entfallen und das von dem Sensor S erzeugte konstante Signal unmittelbar an das Zeitglied $T_2$ geliefert werden kann. Dies ist beispielsweise der Fall, wenn der Sensor S die Radumdrehung abfühlt.

Ersichtlich ist auch der Schalter ZS für die Verwirklichung des Grundgedankens der Erfindung nicht unbedingt erforderlich, verbessert aber die Praktibilität der erfindungsgemäßen Lösung.

## Patentansprüche

1. Zentralschmieranlage mit elektromotorischer Schmierpumpe für Fahrzeuge ohne eigene Stromquelle, wie Anhänger, Auflieger von Nutzfahrzeugen od. dgl., mit einer Zeitglieder aufweisenden elektrischen Zeitsteuereinrichtung (Z) für die Schmierpumpenbetätigung in Abhängigkeit von der Betriebsdauer des Fahrzeuges, wobei die Stromversorgung der Zeitsteuereinrichtung (Z) und des Antriebsmotors (M) für die Schmierpumpe von den Zuleitungen der Bremsleuchten aus erfolgt, und wobei ein drittes Zeitglied ($T_3$) die Zeitdauer der aufeinanderfolgenden Bremsvorgänge, bei welchen der Antriebsmotor (M) der Schmierpumpe eingeschaltet ist, summiert, die Summe der Zeitdauer als Bremsbetätigungszeit mit einer vorgegebenen Zeit (maximalen Schmierpumpenarbeitszeit) ($t_3$) vergleicht und bei Erreichen der vorgegebenen maximalen Schmierpumpenarbeitszeit ($t_3$) ein Signal für die Abschaltung des Antriebsmotors (M) abgibt, gekennzeichnet durch folgende Merkmale:

- die Zeitsteuereinrichtung (Z) hat einen Sensor (S), welcher Schwingungen, Vibrationen oder sonstige Bewegungen des Fahrzeuges oder von Fahrzeugteilen feststellt und dadurch während der Bewegung des Fahrzeuges unmittelbar oder mittelbar ein Signal für ein zweites Zeitglied ($T_2$) erzeugt,

- das zweite Zeitglied ($T_2$) addiert die Zeitdauer der jeweiligen von dem Sensor (S) mittelbar oder unmittelbar gelieferten Signale auf, vergleicht die Summe der Zeitdauer als Fahrzeugbetriebszeit mit einer vorgegebenen Zeit (maximale Schmierpumpenpausenzeit) ($t_2$) und gibt bei Überschreiten der vorgegebenen maximalen Schmierpumpenpausenzeit ($t_2$) durch die aufsummierte Fahrzeugbetriebszeit ein Freigabesignal für die Einschaltung des Antriebsmotors (M) der Schmierpumpe beim nächsten Bremsvorgang ab, und

- das dritte Zeitglied ($T_3$) gibt bei Erreichen der vorgegebenen maximalen Schmierpumpenarbeitszeit ($t_3$) ein Rückstellsignal an das zweite Zeitglied ($T_2$) ab.

2. Zentralschmieranlage nach Anspruch 1, dadurch gekennzeichnet, daß zwischen Sensor (S) und zweites Zeitglied ($T_2$) ein erstes Zeitglied ($T_1$) geschaltet ist, welches beim Eintreffen eines Bewegungssignals von dem Sensor (S) jeweils ein Ausgangssignal vorgegebener Zeitdauer ($t_1$) an das zweite Zeitglied ($T_2$) liefert.

3. Zentralschmieranlage nach Anspruch 1 oder 2, dadurch gekennzeichnet, daß die Vorspannung des Sensors (S) und der Zeitglieder ($T_1$ $T_2$, $T_3$) von einer Pufferkapazität (c) oder Batterie abgenommen wird, welche während eines jeweiligen Bremsvorganges von den Zuleitungen der Bremsleuchten aufgeladen wird.

4. Zentralschmieranlage nach einem der Ansprüche 1 bis 3, dadurch gekennzeichnet, daß die Zeitsteuereinrichtung (Z) einen Schalter (ZS) aufweist, bei dessen Betätigung von Hand ein Freigabesignal für die Einschaltung des Antriebsmotors (M) der Schmierpumpe beim nächsten Bremsvorgang geliefert wird.

**5.** Zentralschmieranlage nach Anspruch 4, dadurch gekennzeichnet, daß bei Betätigung des Schalters (ZS) ein Rückstellsignal für die aufsummierte Fahrzeugbetriebszeit an das zweite Zeitglied ($T_2$) abgegeben wird.

**Claims**

**1.** A centralized lubrication system with a lubricant pump driven by an electric motor, for vehicles without their own power supply, such as trucks, trailers for commercial vehicles and the like, having an electrical timing controller (Z) and timers which actuate the lubricant pump at intervals determined by the vehicle running time, the current source for the timing controller (Z) and the lubricant pump driving motor (M) being the braking light leads, a third timer ($T_3$) summating the durations of of the successive brake operating periods during which the lubricant pump driving motor (M) is switched on, comparison being made between the sum of the brake operating periods and a prescribed time limit (the maximum lubricant pump operating life $t_3$), and a signal for switching off the driving motor (M) being emitted on reaching the prescribed maximum lubricant pump operating life ($t_3$), characterized by the following features:
the timing controller (Z) has a sensor (S) which detects oscillations, vibrations or other movements of the vehicle or parts thereof and indirectly or directly transmits a signal to a second timer ($T_2$) whenever the vehicle is in motion;
the second timer ($T_2$) summates the durations of the signals received indirectly or directly from the sensor (S), compares the sum of the periods detected as vehicle running periods with a prescribed maximum lubricant pump idling period ($t_2$) and, when the prescribed maximum lubricant pump idling period ($t_2$) is exceeded by the sum of the vehicle running periods, generates a releasing signal to switch on the lubricant pump driving motor (M) as soon as the brakes are next applied; and
the third timer ($T_3$) transmits a clearance signal to the second timer ($T_2$) on reaching the prescribed maximum lubricant pump operating life ($t_3$).

**2.** A centralized lubrication system as in Claim 1, characterized in that a first timer ($T_1$) is interposed between the sensor (S) and the second timer ($T_2$), which transmits an output signal of a prescribed duration ($t_1$) to the second timer ($T_2$) when each successive movement signal is received from the sensor (S).

**3.** A centralized lubrication system as in Claim 1 or 2, characterized in that the backing voltage for the sensor (S) and the timers ($T_1, T_2, T_3$) is taken from a buffer capacitance (C) or battery, which is charged through the braking light leads during each braking period.

**4.** A centralized lubrication system as in any of Claims 1 to 3, characterized in that the timing controller (Z) incorporates a switch (ZS) which when manually actuated generates a releasing signal to switch on the lubricant pump driving motor (M) as soon as the brakes are next applied.

**5.** A centralized lubrication system as in Claim 4, characterized in that when the switch (ZS) is actuated a clearance signal for the summated vehicle running periods is transmitted to the second timer ($T_2$).

**Revendications**

**1.** Installation de graissage centralisée avec pompe de graissage entraînée par moteur électrique, pour véhicules sans source de courant propre tels que remorques, semiremorques de véhicules utilitaires ou analogues, comportant un dispositif de commande électrique temporisée (Z) présentant des organes de temporisation afin d'actionner la pompe de graissage en fonction de la durée de marche du véhicule, l'alimentation en courant du dispositif de commande électrique temporisée (Z) et du moteur d'entraînement (M) de la pompe de graissage s'effectuant à partir des conduites électriques des feux de freinage, et un troisième organe de temporisation ($T_3$) additionnant les durées des freinages succesifs pour lesquels le moteur d'entraînement (M) de la pompe de graissage est activé, comparant la somme desdites durées, en tant que temps d'actionnement des freins, à un temps prédéterminé (temps maximal de travail de la pompe de graissage) ($t_3$) et, lorsque le temps maximal de travail prédéterminé de la pompe de graissage ($t_3$) est atteint, émettant un signal de coupure du moteur d'entraînement (M), caractérisée par les caractéristiques suivantes:
- le dispositif de commande temporisée (Z) comporte un capteur (S) qui décèle les oscillations, vibrations ou autres mouvements du véhicule ou de parties du véhicule et génère ainsi, directement ou indirectement, pendant le déplacement du véhicule, un signal pour un deuxième organe de temporisation ($T_2$).
- le deuxième organe de temporisation-

(T$_2$) additionne la durée des signaux fournis, directement ou indirectement, par le capteur (S), compare la somme de ces durées, en tant que temps de marche du véhicule, à un temps maximal prédéterminé (temps de pause maximal de la pompe de graissage) (t$_2$) et, en cas de dépassement du temps de pause maximal prédéterminé de la pompe de graissage (t$_2$) par le temps cumulé de marche du véhicule, émet un signal d'autorisation d'activation du moteur d'entraînement (M) de la pompe de graissage lors du prochain freinage, et

- lorsque le temps maximal de travail prédéterminé de la pompe de graissage (t$_3$) est atteint, le troisième organe de temporisation (T$_3$) fournit un signal de réinitialisation au deuxième organe de temporisation (T$_2$).

2. Installation de graissage centralisée selon revendication 1, caractérisée par le fait qu'il y a, entre le capteur (S) et le deuxième organe de temporisation (T$_2$), un premier organe de temporisation (T$_1$) qui, lors de l'arrivée d'un signal de mouvement venant du capteur (S), fournit chaque fois un signal de sortie de durée prédéterminée (t$_1$) au deuxième organe de temporisation (T$_2$).

3. Installation de graissage centralisée selon revendication 1 ou 2, caractérisée par le fait que la polarisation du capteur (S) et des organes de temporisation (T$_1$, T$_2$, T$_3$) est fournie par une capacité d'accumulation (C) ou par une batterie qui, au cours de chaque freinage, est chargée à partir des conduites d'alimentation des feux de freinage.

4. Installation de graissage centralisée selon l'une des revendications 1 à 3, caractérisée par le fait que le dispositif de commande temporisée (Z) présente un interrupteur (ZS) qui, lorsqu'il est actionné manuellement, fournit un signal d'autorisation d'activation du moteur d'entraînement (M) de la pompe de graissage lors du prochain freinage.

5. Installation de graissage centralisée selon revendication 4, caractérisée par le fait que, lors de l'actionnement de l'interrupteur (ZS), un signal de réinitialisation concernant le temps de fonctionnement cumulé du véhicule est fourni au deuxième organe de temporisation (T$_2$).

Bremsleuchten

Z

S

ZS

C

T1 → T2 → T3

R

M

EP 0 258 550 B1